Europäisches Patentamt

European Patent Office

Office européen des brevets

(11) Publication number: 0 372 750
A1

# EUROPEAN PATENT APPLICATION

(21) Application number: 89312124.4

(22) Date of filing: 22.11.89

(51) Int. Cl.⁵: B01D 53/32

(30) Priority: 09.12.88 GB 8828823

(43) Date of publication of application:
13.06.90 Bulletin 90/24

(84) Designated Contracting States:
DE FR

(71) Applicant: THE MARCONI COMPANY LIMITED
The Grove Warren Lane
Stanmore Middlesex HA7 4LY(GB)

(72) Inventor: Smith, Cyril
Bushy Leaze Lane 99 Medstead Road
Beech, Alton Hampshire(GB)

(74) Representative: Keppler, William Patrick
Central Patent Department Wembley Office
The General Electric Company, p.l.c. Hirst
Research Centre East Lane
Wembley Middlesex HA9 7PP(GB)

(54) Gas separator.

(57) A gas separator for use in separating gases according to their molecular weights. The separator can be used as a preconcentrator for a particular constituent gas in a mixture, to raise the concentration of the gas to a level which can be measured by a detector. One area of application is in the direction of traces of explosives. The operation of the separator relies on subjecting the mixture of gases to a high intensity alternating electric field (3) which has a region of non-uniformity. The field produces a dipole moment in the gas molecules. Molecules with larger molecular weights, which generally have greater dipole moments, preferentially concentrate in the non-uniform region of the electric field, from where they are collected (5). The separator is suitable for preconcentration of gases with concentrations as low as one part in $10^8$, compared with existing preconcentrators, using chemical or physical sieves, which are typically limited to target agent starting concentrations of greater than one part in $10^3$.

Fig.1.

## GAS SEPARATOR

This invention relates to a gas separator for use in separating gases according to their molecular weights. In particular, although not exclusively, it relates to a gas separator for use as a preconcentrator of a particular constituent gas or number of gases.

The purpose of a preconcentrator is to increase the concentration of a particular constituent gas or number of gases in a mixture to a level which can be measured by a detector. In this way the effective molecular sensitivity of the detector is improved. One application of such a device is in the detection of explosives.

Existing preconcentrators rely on chemical or physical sieves to either remove the unwanted gas or collect the gas of interest. Such devices may well have reached their concentration performance limits. They also suffer from susceptibility to poisoning and interferents and have limited run times, needing periodic renewal or re-activation. Practical preconcentration capabilities are limited typically to target agent starting concentrations of greater than one part in $10^3$ to one part in $10^5$ at best. Pollution monitoring and trace detection applications often call for preconcentration of agents with concentrations as low as one part in $10^8$.

It is an object of the invention to provide a gas separator having gas separation capabilities superior to those of known preconcentrators.

According to the invention, a gas separator comprises a duct through which the gas is passed in operation, electrode means extending along the duct, the duct and the electrode means being arranged to impose across the duct an electric field which in a region extending part of the way across the duct is non-uniform, the separator further comprising collecting means for separating off that part of the gas flow output from said region. The electrode means may include at least a wall of the duct.

In a practical embodiment the separator preferably includes a surface within the duct adapted to provide the non-uniform region, the surface preferably being microscopically rough.

The collecting means is preferably adapted to separate off that part of the gas flow output that lies within a distance of the microscopically rough surface which is not substantially greater than twice the depth of the rough surface. Alternatively, the collecting means may be adapted to separate off that part of the gas flow output that lies within a distance of the microscopically rough surface which is not substantially more than an order of magnitude greater than the depth of the rough surface.

The duct may be of rectangular section, with the electrode means arranged to provide the field in a direction substantially parallel to the smaller dimension of the duct. The rough surface is preferably at least one of the inner surfaces of the duct. Alternatively, the duct may include an internal wall or partition providing the rough surface. Such an internal wall may include part of the electrode means.

In a further embodiment of the invention the electrode means includes a conductive wire extending along and within the duct and providing said surface. In this case, the duct may be of cylindrical form.

A gas separator may comprise two or more ducts each as aforesaid arranged in cascade so that an output port of each duct emitting gas from the non-uniform region of the field is coupled to the input of the following duct, if any.

In all embodiments of the invention the electric field may be an alternating field.

According to one aspect of the invention, a method of separating a mixture of gases according to their molecular weights comprises the steps of passing the mixture through a duct, imposing across the duct, in a direction substantially transverse to the flow of the gases, an electric field which in a region extending part of the way across the duct is non-uniform, and separating off that part of the gas flow output from that region.

A gas separator in accordance with the invention will now be described, by way of example, with reference to the accompanying drawings, of which:

Figure 1 which is a diagrammatic illustration of a gas separator having a duct of rectangular section;

Figure 2 shows a section through two such gas separators connected in cascade;

Figure 3 shows in section an alternative construction of the gas separator of Figure 1;

Figure 4 and Figure 5 are illustrations of gas separators having alternative electrode means; and

Figure 6 and Figure 7 show gas separators having a duct of circular section.

The separator may be used to preconcentrate a contaminant present in air which has a molecular weight greater (by,say, a factor of two at least) than that of the abundant constituent gases.

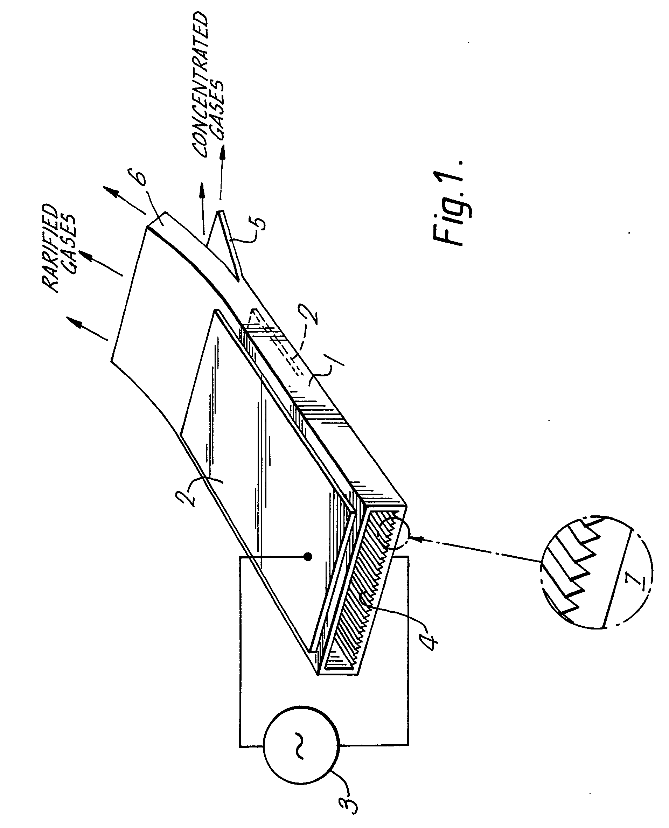

Referring to Figure 1, a duct 1 of rectangular cross-section which is made of electrically insulating material is shown. Electrodes 2, each consisting of a plate of conductive material, are located on the outer faces of opposite walls of the duct, and are connected to an alternating high voltage source 3 (suitably 100kV) so as to produce an electric field in a direction substantially parallel to the smaller duct dimension. A d.c. voltage may be used but an alternating voltage has advantages as will be explained later.

One of the broad inner surfaces of the duct is etched to create a microscopically rough surface 4 consisting of close-packed longitudinal sharp edges (as shown magnified 7) or points ( not shown) each having a tip radius of preferably less than one micron and not greater than 3 micron. Suitable spacing of these edges is in the range 1 to 1000 micron.

Air containing the contaminant gas to be preconcentrated is passed through the duct. At one end the duct is divided into two output ports, one 5 relatively narrow in depth, from which the gas close to the etched surface is emitted, the other 6 of greater depth, the output of which is exhausted to the atmosphere or may be collected in some applications. The depth of the port 5 should preferably not be greater than say twice the height of the sharp edges or points on the etched surface, although its size is primarily decided by considering the required preconcentration capability and a depth not more than an order of magnitude greater than the height of the rough surface will still produce useful results.

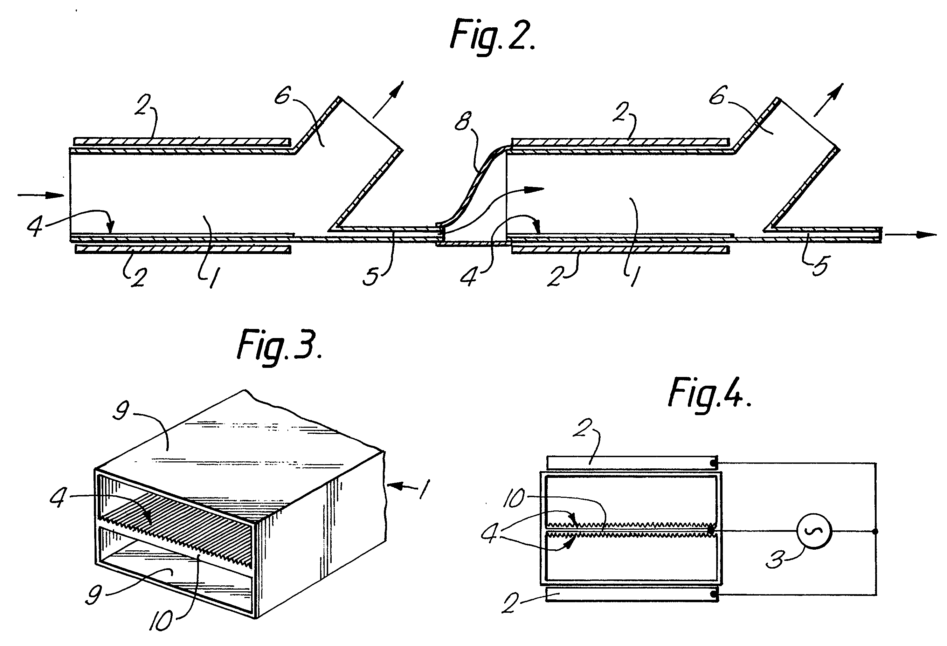

Although only one duct is shown in Figure 1, the separator would normally comprise a number of such ducts arranged in cascade. Two identical ducts connected in series are shown, by way of example, in Figure 2, the electrical connections to the electrodes 2 being omitted for clarity. The output port 5 of the first duct is coupled to the input of the second duct by means of an expansion taper 8. In this way, the concentration of the contaminant gas is increased at each stage and the overall preconcentration efficiency of the separator is improved. Although only two ducts are shown in Figure 2, the number of ducts used in a cascade arrangement will depend on the performance required, a suitable number being, say, in the range 2 to 10.

The duct is preferably made of electrically insulating material to prevent conduction currents. The alternating voltage applied to the electrodes produces a substantially but not wholly uniform electric field across the duct. This field stresses and polarises the broad walls of the duct. The field is in a direction substantially transverse to the plane of the microscopically rough surface 4. At the wall containing the rough surface a non-uniform field enhancement occurs as alternating electric charges concentrate at the sharp edges of the etched surface. The field enhancement occurs substantially closer to the rough surface, decaying rapidly with distance to a zero value (i.e. uniform field) at a distance say ten times the height of the sharp edges. The field also induces electrical polarisation of the gas molecules within the duct to produce molecules having a dipole moment. A polarised molecule in the uniform region of the field will align itself with the direction of the field, but will then experience no net force due to the field. Under the random motion of the molecules of a gas, each polarised molecule will, in time, move into the non-uniform region of the field. In the non-uniform region of the field there will be a net force on the aligned polarised molecule, the force being dependent on the degree of non-uniformity and on the dipole moment.

The direction of this net force is independent of the direction of the field, but is dependent upon the direction in which the intensity of the field increases. This is towards the etched surface, where the lines of force, which may be drawn to represent the field, converge at the sharp edges or points. Thus all the polarised molecules are attracted towards the region of greater field intensity and so towards the rough surface. Molecules which are inherently polar behave in the same manner.

The concentration of molecules will vary exponentially across the field depending upon their different potential energies according to the Boltzmann distribution, so that those with the greatest dipole moment will preferentially predominate in the area of the highest field strength, that is in the vicinity of the etched surface.

In operation, the air to be analysed, containing a minority constituent gas, which may be a contaminant which needs preconcentration to a detectable level, is passed through the cascade of ducts. In general, the greater the molecular weight of a gas the greater will be its dipole moment. Gases normally present in the atmosphere with concentrations greater than one part in $10^7$ generally have molecular weights below 50, while the gases to be preconcentrated generally have molecular weights above 100. Therefore, the molecules with the greatest dipole moments will preferentially concentrate near the etched surface. Hence, the output of the final duct of the separator will contain predominantly gases such as $CO_2$, $N_2O$ and $O_3$, plus the sought after heavier contaminants if present.

Since the direction of the force on a gas molecule in a non-uniform electric field is independent of the direction of the field, the electric polarising field can, therefore, be generated by an alternating source, which simplifies the provision of the high potential, minimises the chances of ionisation of the gas (and any subsequent breakdown), as well as eliminating ionic attractions.

In an alternative construction to that shown in Figure 1, one or both of the electrodes may be an integral part of the duct wall. Such a conducting wall may have the microscopically rough surface on its internal face. In this case, unlike that of a duct made entirely of dielectric material, the wall itself will not be polarised, but will acquire a net positive or negative charge according to the applied potential. This charge is concentrated at the tips of the microscopic sharp edges of the rough surface to produce the non-uniform field enhancement as before. Lithographic techniques such as those used in the manufacture of semiconductor devices may be used to etch the rough surface.

While a rectangular duct is convenient, the short side walls merely serve to close the duct and could, of course, be curved if desired.

It should be noted that both the broad inner surfaces of the duct (or the integral electrodes as appropriate) may be etched, in which case gas is collected from the two rough surfaces and two outputs are provided which may be combined by means of the connecting taper in a cascade arrangement.

In another possible arrangement, shown in outline in Figure 3, the duct includes an internal wall or partition 10 intermediate the broad walls 9 . The internal wall 10 extends along the length of the duct 1 and provides two surfaces transverse to the field, at least one of which may be rough as aforesaid. The required gas is then collected (not shown) close to the rough surface or surfaces 4 of the wall 10. Figure 3 shows a view of the input end of the duct.

In a further embodiment, shown in outline in Figure 4, the internal wall consists of an additional electrode 11 which may itself provide the rough surface, or may be covered by a dielectric material on the surfaces transverse to the field, the material providing the rough surfaces. The electric field is produced between the additional internal electrode 11 and the two outer electrodes 2 , in the two sections of the duct created by the internal wall. In the case of the duct with the internal electrode, it will be seen that both sides of the internal wall or electrode should be rough to obtain the full benefit of the field enhancement in its vicinity. Figure 4 shows an end view of the input of the duct.

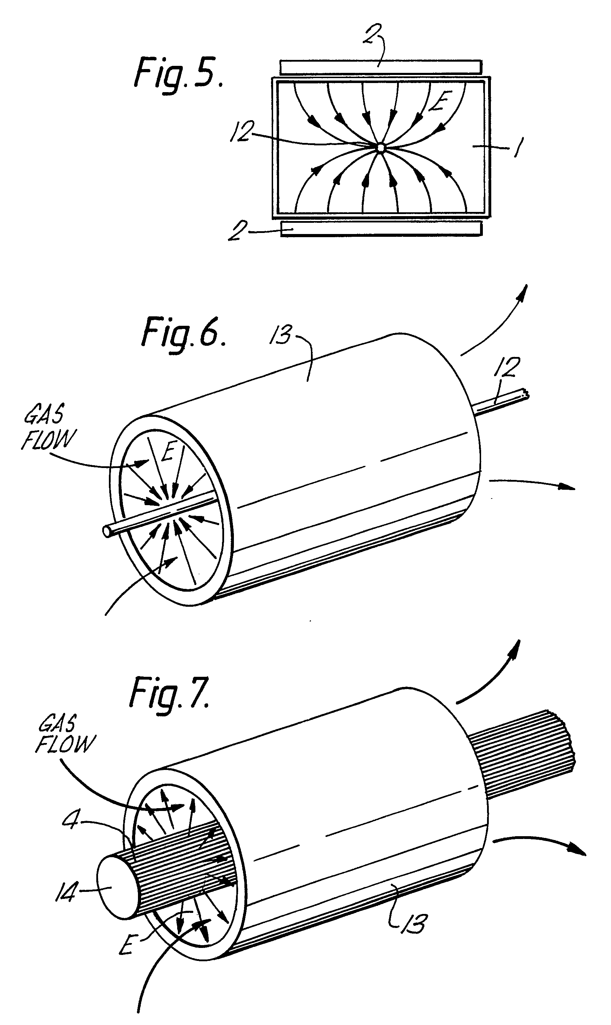

In a further embodiment, shown in Figure 5, the duct has a conductive fine wire 12 extending along and within it, supported, for example, by insulating threads (not shown). The electric field E is produced within the duct by applying the high voltage between the wire 12 and the outer electrodes 2. The field E is radial in the vicinity of the wire 12 and the lines of force which may be drawn to represent the field aspire to converge at the axis of the wire. Thus the region close to the wire surface is that of the highest field strength and the heavier gas molecules preferentially concentrate around the wire 12, from where they can be collected. It should be noted than in this embodiment no rough surface is needed as the radial field has an inherent non-uniformity. Figure 5 shows an end view of the input of the duct, the support for the wire 12 and the port for collecting the gas concentrated at the surface of the wire 12 being omitted for clarity.

Figure 6 illustrates a variation of the last mentioned embodiment, wherein the duct 13 is of cylindrical form, i.e. of oval or circular section, and the electric field E is produced by applying the high voltage between the wire 12 and a surrounding outer electrode. The outer electrode may be a hollow tube surrounding the duct or may (as shown) be the duct 13 itself, if made of conductive material. The concentrated gas is again collected in the vicinity of the wire 12.

In a further variation of this embodiment, shown in Figure 7, the circular duct 13 has a rod or cylinder 14 extending along and within it in place of the fine wire 12, the outer surface 4 of this rod or cylinder being rough.

It will be seen from the above descriptions that there are a number of combinations of various shaped ducts, rough surfaces and electrodes which are capable of producing the desired non-uniform electric field as a means of concentrating particular gases.

## Claims

1. A gas separator comprising a duct (1) through which the gas is passed in operation, characterised by having electrode means (2) extending along the duct (1), said duct (1) and said electrode means (2) being arranged to impose across the duct (1) an electric field which in a region extending part of the way across the duct (1) is non-uniform, the separator further comprising collecting means (5) for separating off that part of the gas flow output from said region.

2. A gas separator according to Claim 1, wherein said electrode means (2) includes at least a wall of the duct (1).

3. A gas separator according to Claim 1 or Claim 2, including a surface within the duct (1) adapted to provide said region.

4. A gas separator according to Claim 3, wherein said surface is a microscopically rough surface (4).

5. A gas separator according to Claim 4, wherein said collecting means (5) is adapted to separate off that part of the gas flow output which lies within a distance of said microscopically rough surface (4) which is not substantially greater than twice the depth of the rough surface (4).

6. A gas separator according to Claim 4, wherein said collecting means (5) is adapted to separate off that part of the gas flow output which lies within a distance of said microscopically rough surface (4) which is not substantially more than an order of magnitude greater than the depth of the rough surface (4).

7. A gas separator according to any of Claims 4 to 6, wherein said duct (1) is of rectangular cross-section and said electrode means (2) is arranged to provide said field in a direction substantially parallel to the smaller dimension of the duct.

8. A gas separator according to Claim 7, wherein said rough surface (4) is at least one of the inner surfaces of the duct (1).

9. A gas separator according to Claim 7, wherein the duct (1) includes an internal wall (10) providing said rough surface (4).

10. A gas separator according to Claim 9, wherein said internal wall (10) constitutes part of said electrode means (2).

11. A gas separator according to Claim 3, wherein said electrode means includes a conductive wire (12) extending along and within the duct (1) and providing said surface.

12. A gas separator according to Claim 11, wherein said duct is of cylindrical form (13).

13. A gas separator according to any preceding claim, wherein two or more of said ducts (1) are arranged in cascade so that an output port (5) of each duct (1) emitting gas from said region is coupled (8) to an input of the following duct (1), if any.

14. A gas separator according to any preceding claim, wherein said field is an alternating field.

15. A method of separating a mixture of gases according to their molecular weights comprising the steps of passing said mixture through a duct, imposing across said duct, in a direction substantially transverse to the flow of the gases, an electric field which in a region extending part of the way across the duct is non-uniform, and separating off that part of the gas flow output from said region.

Fig.1.

Fig.2.

Fig.3.

Fig.4.

EP 0 372 750 A1

Fig.5.

Fig.6.

GAS
FLOW

Fig.7.

GAS
FLOW

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-C-321769 (F.SKAUPY) <br> * the whole document * | 1, 10-15 | B01D53/32 |
| A | DE-A-3440781 (F.GERMANN ET AL.) <br> * claim 1 * | 1 | |

TECHNICAL FIELDS
. SEARCHED (Int. Cl.5 )

B01D

The present search report has been drawn up for all claims

| Place of search | Date of completion of the search | Examiner |
|---|---|---|
| BERLIN | 13 MARCH 1990 | BERTRAM H.E.H. |

EPO FORM 1503 03.82 (P0401)